# EUROPÄISCHE PATENTSCHRIFT

(11) **EP 1 008 797 B1**
(45) Veröffentlichungstag und Bekanntmachung des Hinweises auf die Patenterteilung: **17.11.2004**
(21) Anmeldenummer: 99122932.9
(22) Anmeldetag: 18.11.1999
(51) Int. Cl.: F16L 55/00, B23K 31/02

(54) **Verfahren und Vorrichtung zum automatischen Protokollieren der Verbindungsvorgänge bei der Erstellung eines Rohrnetzes**
Method and device for automatically tracing the connecting operations in a pipe network
Procédé et appareil pour l'établissement automatique de la mise en oeuvre des connexions dans un réseau de tuyauterie

(30) Priorität: 11.12.1998 DE 19857344
(43) Veröffentlichungstag der Anmeldung: 14.06.2000
(73) Patentinhaber: PF Schweisstechnologie GmbH, 36304 Alsfeld (DE)
(72) Erfinder: Spychalski-Merle, Achim, 36304 Alsfeld (DE)
(74) Vertreter: Fritsche, Rainer, Dipl.-Wirtsch.-Ing.

(56) Entgegenhaltungen:
- EP-A- 0 382 168
- EP-A- 0 816 008
- US-A- 5 620 625

## Beschreibung

Die vorliegende Erfindung betrifft ein Verfahren sowie eine Vorrichtung zum automatischen Protokollieren der Erstellung von durch Verbinden von Rohrteilen hergestellten Rohrnetzen gemäß den Ansprüchen 1 und 15.

In der beispielsweise Gas- und Wasserversorgung sind Rohrnetze aus Rohrteilen aufgebaut, die zum Beispiel durch Schweißvorgänge miteinander verbunden werden. Neben den eigentlichen Rohren umfassen die Rohrteile beispielsweise auch T-Stücke, Abgänge bzw. Sättel, Verschlußkappen, Bögen, Reduzierstücke, Übergangsstücke, Flansche usw. Sind die Rohrteile aus einem thermoplastischen Kunststoff (z.B. Polyethylen) gefertigt, sind die hierbei eingesetzten Verbindungstechniken in aller Regel das Stumpfschweißen oder das Heizwendelschweißen.

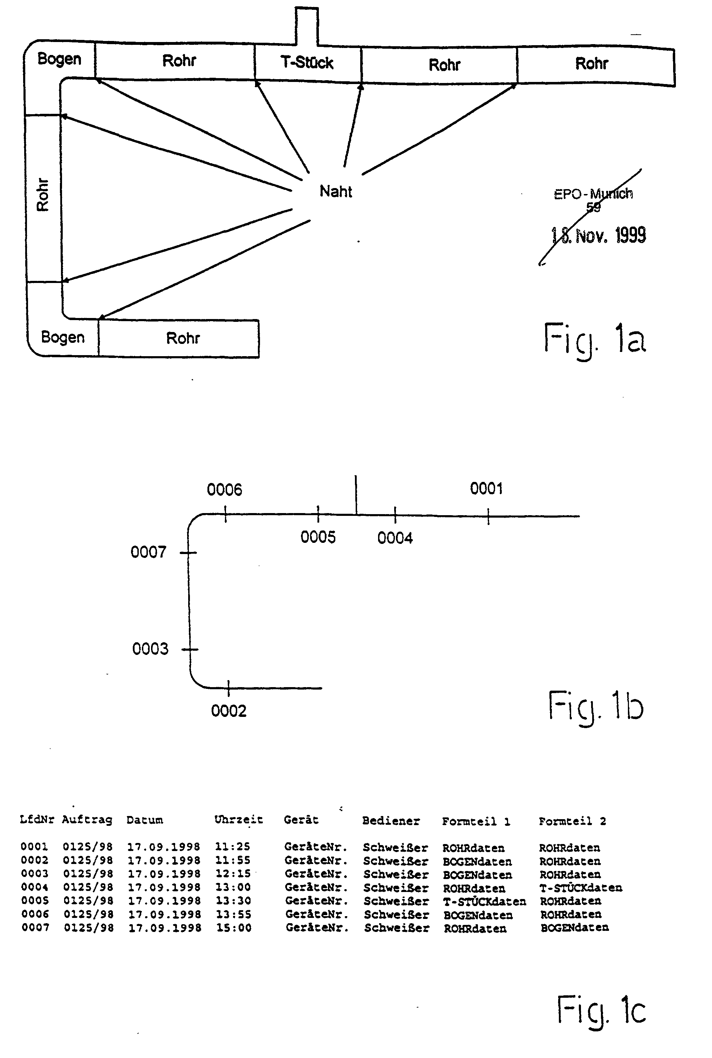

Ersteres wird in der Regel für Hauptleitungen oder Ringverteiler eingesetzt, bei denen die Rohre verhältnismäßig große Durchmesser besitzen. Hierbei werden die Verbindungsflächen der miteinander zu verschweißenden Rohrteile mittels einer Heizplatte erwärmt. Nach einer bestimmten Heizdauer hat sich der thermoplastische Kunststoff an den Verbindungsstellen bis über den Schmelzpunkt erhitzt, so daß das Heizelement entfernt und die Rohrteile zusammengefügt werden können. Ein Beispiel für ein derart aufgebautes Rohrnetz ist in Figur 1 a schematisch gezeigt.

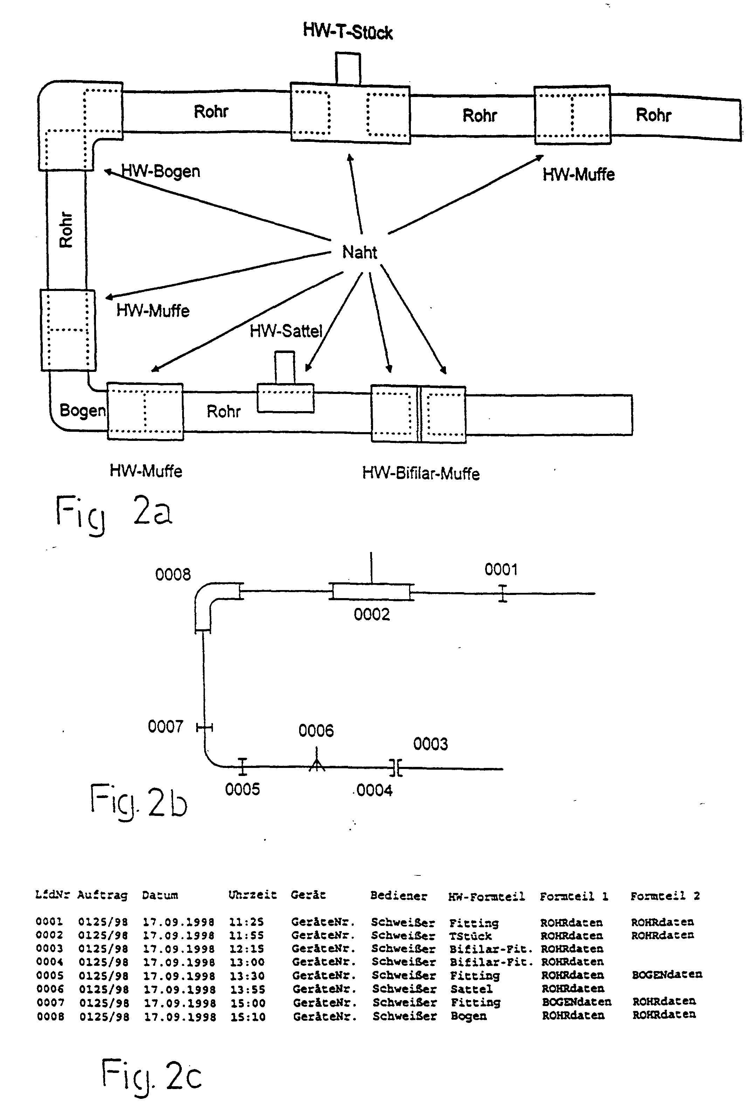

Demgegenüber wird das Heizwendelschweißen für Hausanschlüsse, Nebennetze sowie Hauptleitungen bis zu einem Durchmesser von ca. 600 mm eingesetzt. Zur Verbindung zweier Rohrteile werden diese in ein geeignetes Heizwendel-Verbindungselement, wie beispielsweise einer Heizwendelmuffe, einem Heizwendel-T-Stück eingeschoben bzw. wird diesen ein Heizwendel-Sattel aufgesetzt usw. und die Heizwendel mit einer externen Stromquelle verbunden. Hierdurch erhitzt sich die Heizwendel und erwärmt dabei den Kunststoff in ihrem näheren Umgebungsbereich. Nach Erreichen der Kunststoff-Schmelztemperatur fließt der Kunststoff der untereinander zu verbindenden Rohrteile und des Heizwendel-Verbindungselements ineinander und härtet nach Abschalten des Heizwendelstromes zu einer gasundloder flüssigkeitsdichten Verbindung aus, wobei das Heizwendel-Verbindungselement an Ort und Stelle zurückbleibt. Ein Beispiel für ein durch Heizwendel-Verbindungselemente aufgebautes Rohrnetz ist in Figur 2a schematisch gezeigt.

Es kann nun vorkommen, daß nach der Erstellung des Rohrnetzes einzelne Rohrteile ausgetauscht werden müssen. Beispielsweise kann dies der Fall sein, wenn es sich herausstellt, daß ein bestimmtes Rohrteillos einen Materialfehler aufweist oder daß die Verbindung der Rohrteile mangelhaft ausgeführt wurde, zum Beispiel wenn die Heizzeit im Falle von Kunststoff-Rohrteilen bei einer Reihe von Schweißverbindungen nicht ausreichend war, um eine flüssigkeits- oder gasdichte Verbindung zu erzielen. Ist die genaue Lage der auszutauschenden Rohrteile oder die mangelhaften Verbindungsstellen in dem Rohrnetz nicht bekannt, bleiben dem Netzbetreiber nur zwei Möglichkeiten: er kann warten, bis eine Undichtigkeit auftritt, was aber mit einem hohen Haftungsrisiko verbunden ist; alternativ kann ein systematischer Austausch aller Rohrteile oder eine systematische Nachbearbeitung aller Verbindungsstellen erfolgen, was aber wiederum mit hohen Kosten verbunden ist.

Es ist daher für die Netzhersteller und die Netzbetreiber prinzipiell notwendig, Kenntnisse über die für das Rohrnetz verwendeten Rohrteile sowie insbesondere über deren Lage in dem Netz zu haben. Hierzu werden Rohrnetzpläne sowie Protokollisten erstellt, die Auskunft über die Lage einzelner Rohrteile und Verbindungsstellen in einem Netz geben.

Um einen derartigen Plan zu erstellen, werden in der Praxis zwei im wesentlichen unabhängige Handlungen ausgeführt:
Bei der Durchführung beispielsweise eines Schweißvorganges innerhalb eines zu erstellenden Rohrnetzes wird für die Schweißverbindungsstelle eine laufende Nummer vergeben. Diese laufende Nummer wird zusammen mit spezifischen Daten der in diesem Schweißvorgang miteinander zu verbindenden oder bereits miteinander verbundenen Rohrteile protokolliert. Bei den spezifischen Rohrteildaten kann es sich um Informationen über den Typ (Rohr, T-Stück usw.) und den Durchmesser handeln. Je nach eingesetzter Schweißtechnik kommen zu diesen Daten noch weitere rohrteilspezifische Daten hinzu.

Im Falle des Heizwendelschweißens für Kunststoffrohre handelt es sich hierbei um Angaben über die Spannung, die Zeit, die Zeitkorrektur in Abhängigkeit der Umgebungstemperatur, die Abkühlzeit, den Widerstand der Heizwendel und der Fertigungs- und Temperaturtoleranz (Temperaturbeiwert) der Heizwendel usw. Bei der Stumpfschweißtechnik handelt es sich um Angaben über das Material, wie beispielsweise die Rohmaterialidentifizierung, die Rohmaterialklassifizierung (MRS) oder die Fließeigenschaften des Materials (MFI), den Durchmesser, die Wanddicke (SDR), den Hersteller, die Chargennummer und den Produktionsort, den Typ usw.

Diese Daten werden zumindest teilweise den Schweißgeräten eingegeben, so daß diese dann daraus die für die Erstellung der Schweißverbindung notwendigen Schweißdaten ableiten bzw. berechnen können. Aus diesen Daten erstellen die Schweißgeräte weiterhin nach Durchführung des Schweißvorganges die in den Figuren 1c, 2c gezeigten Protokolle, aus denen neben den in den Figuren 1c, 2c weiter dargestellten Informationen zumindest die laufende Nummer für eine Schweißverbindungsstelle und die rohrteilspezifischen Daten unter den Überschriften "Formteil 1" und "Formteil 2" hervorgehen. Die Eingabe der Daten in ein Schweißgerät kann dabei manuell (die Daten sind dabei codiert (z.B. Barcode) oder im Klartext auf dem Rohrteil angebracht) oder automatisch im Wege einer Magnetkarte erfolgen.

Würde das Rohrnetz keine Abzweigungen enthalten und streng in eine Richtung aufgebaut werden, so würde diese Protokollierung ausreichen, um nach Erstellung des Rohrnetzes einen entsprechenden Rohrnetzplan anfertigen zu können. Häufig weisen aber Rohrnetze eine Vielzahl von Abzweigungen und dgl. auf, an denen die weitere Erstellung des Rohrnetzes in nur eine Richtung nicht mehr möglich ist. Darüber hinaus wird bei der Erstellung eines Rohrnetzes häufig "gesprungen", d.h., daß bis zu einer bestimmten Verbindungsstelle gearbeitet und dann an einer anderen Stelle innerhalb des Rohrnetzes fortgefahren wird, um anschließend zu der zuerst genannten Verbindungsstelle zurückzukehren.

In diesen Fällen reicht die bloße Protokollierung der einzelnen Vorgänge mit laufender Nummer und spezifischen Rohrteildaten nicht mehr aus, da eine eindeutige Lagezuordnung der Rohrteile zu der jeweiligen Verbindungsstelle nicht vorhanden ist. Deshalb führt die den Verbindungsvorgang ausführende Person eine handschriftliche Skizze, in der für jede Verbindungsstelle die zugehörige fortlaufende Nummer, die vorher für den Verbindungsvorgang vergeben worden ist, eingetragen wird. In den Figuren 1 b, 2b sind Beispiele dieser Skizzen für die in den Figuren 1a, 2a gezeigten Rohrnetze wiedergegeben.

Nach Fertigstellung des Rohrnetzes kann dann manuell die Erstellung eines Rohrnetzplanes in der Weise erfolgen, daß die handschriftliche Skizze (Fig. 1b, 2b) mit den dort eingetragenen laufenden Nummern für jede Verbindungsstelle mit der vorstehend erwähnten Protokolliste (Fig. 1c, 2c), die ebenfalls die laufenden Nummern der Verbindungsvorgänge und die rohrteilspezifischen Daten enthält, zusammengeführt wird.

Weiterhin ist es in der Praxis bekannt, jedem Auftrag (Baustelle, Hausanschluß, Ringleitung) eine bestimmte Verwaltungsnummer (Kommissionsnummer) zu zuweisen. Hierdurch lassen sich die Baustellen voneinander unterscheiden.

Darüber hinaus ist es in der Praxis für die Verbindungsart "Schweißen" bereits bekannt, die für jede Schweißstelle notwendige fortlaufende Nummer automatisch durch das Schweißgerät erstellen zu lassen und der jeweiligen Schweißstelle zuzuordnen.

Es ist ohne weiteres einsichtig, daß die bekannte Vorgehensweise überaus arbeitsintensiv ist. Darüber hinaus können schnell Fehler und damit unzutreffende Rohrnetzpläne mit den entsprechenden Folgen entstehen.

Aus der europäischen Patentanmeldung 0 816 008 geht ein System zur Überwachung von Rohrverlegearbeiten in einem Halbleiterwerk hervor. Das System enthält eine Maschine zum Ausführen der Rohrverbindungsvorgänge, beispielsweise durch Schweißen, Kontrollmittel zum Überprüfen, ob die Rohrverlegearbeit korrekt ausgeführt worden ist, basierend auf vorbestimmten Werten der Rohrverlegebedingungen und der aktuellen Rohrverlege-Arbeitsdaten, einen Host-Computer zum Sammeln der vorbestimmten Werte der Rohrverlegebedingungen, der tatsächlichen Rohrverlege-Arbeitsdaten und des Ergebnisses der Überprüfung sowie Kommunikationsmittel zum Übertragen der vorbestimmten Werte der Rohrverlege-Arbeitsbedingungen, der tatsächlichen Rohrverlege-Arbeitsdaten und das Ergebnis der Überprüfung.

Es ist Aufgabe der vorliegenden Erfindung ein Verfahren sowie eine Vorrichtung der eingangs genannten Art zu schaffen, die auf einfache Weise eine automatische Protokollierung der Verbindungsvorgänge bei der Erstellung von Rohrnetzen ermöglichen.

Hinsichtlich des Verfahrens wird die vorstehende Aufgabe durch die Merkmale des Anspruchs 1 gelöst. Vorteilhafte Ausgestaltungen dieses Verfahrens finden sich in den Unteransprüchen 2 bis 14.

Durch die Generierung einer einem Rohrteil eines Netzes eindeutig zugehörigen Identifikationskennung, die mit der einen Verbindungsvorgang wiederum eindeutig identifizierenden Kennung (= z.B. laufende Nummer, Schweißnahtnummer) verknüpft wird, besteht auf einfache Weise die Möglichkeit, die Erstellung von Rohrnetzplänen ohne Nachbearbeitung auszuführen. Es bedarf insbesondere nicht der arbeitsintensiven und fehlerträchtigen Erstellung der handschriftlichen Skizze sowie deren Verknüpfung mit den die rohrteilspezifischen Daten enthaltenden Verbindungsprotokollen, da letztere bereits mit der dem jeweiligen Rohrteil des Rohrnetzes eindeutig zugehörigen Identifikationskennung verknüpft und bei der Durchführung des Verbindungsvorganges, im Vorfeld oder im Nachgang in dem Speicher eines geeigneten Gerätes eingegeben bzw. abgespeichert werden. Diese Eingaben können dann mit den fortlaufenden Nummern für die Kennzeichnung eines Verbindungsvorganges verknüpft werden. Hierdurch ist nun eine eindeutige Lageinformation der Rohrteile und der Verbindungsstellen vorhanden.

Prinzipiell besteht die Möglichkeit, daß allen Rohrteilen vor der Durchführung der Verbindungsvorgänge im voraus jeweils eine zu dem jeweiligen Rohrteil des Rohrnetzes eindeutig gehörende Identifikationskennung zugewiesen wird. Dies setzt aber voraus, daß sämtliche Rohrteile bereits bekannt sind. Wo dies noch nicht zutrifft, kann ebenfalls vor der Durchführung eines einzelnen Verbindungsvorganges den für diesen Verbindungsvorgang verwendeten Rohrteilen jeweils eine zu dem jeweiligen Rohrteil des Rohrnetzes eindeutig gehörende Identifikationskennung zugewiesen werden.

Sind bereits Rohrteile in dem Rohrnetz verbaut worden, so kann bei einem Verbinden eines bereits in das Rohrnetz integrierten Rohrteils dessen bereits zugewiesene Identikationskennung aus dem Speicher aufgerufen werden, ggf. mit der dem neu hinzuzufügenden Rohrteil zugewiesen Identifikationskennung sowie der den Verbindungsvorgang identifizierenden Kennzeichnung verknüpft und in dem Speicher abgelegt werden. Hierbei kann auch vorgesehen sein, daß dem Benutzer mehrere Identifikationskennungen verschiedener, eine Weitererstellung des Rohrnetzes ermöglichender Rohrteile zur Auswahl oder aber eine zeichnerische Darstellung des Rohrnetzplanes, oder Teilen davon, angeboten wird. Hierbei kann auch mittels eines entsprechenden Stiftes die Identifikationskennung auf dem Rohrteil notiert werden. Alternativ besteht die Möglichkeit, daß bei einem Verbinden eines bereits in das Rohrnetz integrierten Rohrteils dessen bereits zugewiesene Identifikationskennung gelesen, mit der dem neu hinzuzufügenden Rohrteil zugewiesenen Identifikationskennung sowie der den Verbindungsvorgang identifizierenden Kennzeichnung verknüpft und in dem Speicher abgelegt werden.

Neben der Identifikationskennung für die Rohrteile und der den Verbindungsvorgang identifizierenden Kennzeichnung können noch eine der folgenden Dateninformationen in dem Speicher abgelegt werden:
- die Kommissionsnummer des Auftrags,
- Datum, Uhrzeit, Umgebungstemperatur, Wetter,
- Daten des Verbindungsgerätes, insbesondere Schweißgerätes
- Daten der Bedienungsperson
- Prozeßdaten oder
- Formteildaten (z.B. Typ, Hersteller, Chargennummer usw.).

Die Gerätedaten werden vom Gerät automatisch in die Protokolle eingefügt.

Die Daten, welche sich auf den Arbeiter bzw. Bediener beziehen, werden in der Regel über einen Barcode oder eine Magnetkarte in das Gerät eingegeben. Neben den Sonderlösungen einiger Gerätehersteller wird von der ISO 12176-3 (Arbeitsdokument N242) ein Codeaufbau standardisiert, der die wesentlichen Daten eines berechtigten Bedieners enthalten soll:
- Personalidentifikation
- Prüfungsdatum
- Land
- Ausgabeorganisation
- Freigabe für verschiedene Verbindungsverfahren, insbesondere Schweißverfahren
- Sprache

Bei der Erstellung eines Rohrnetzes kann es vorkommen, daß ein Übergang zu einem bereits existierenden oder einem sich gerade ebenfalls in der Erstellung befindlichen Rohrnetz vorgesehen werden muß. In diesem Fall kann das hierfür vorgesehene Rohrteil eine den Übergang kennzeichnende Identifikationskennung erhalten.

Während sich die Prozeßsteuerung im Falle des Stumpfschweißens von Kunststoff-Rohrteilen aus den Rohrteildaten sowie einem vordefinierten Schweißablauf ergibt, müssen für die Heizwendelschweißung zusätzliche Daten wie Schweißspannung usw. bereitgestellt werden. Diese können z.B. manuell, über Barcode oder Magnetkarte in das Gerät eingegeben werden. Der mittlerweile standardisierte Barcode enthält folgende Daten des Heizwendel-Rohrteils:
- Typ
- Durchmesser
- Spannung
- Zeit
- Zeitkorrektur in Abhängigkeit der Umgebungstemperatur
- Abkühlzeit
- Widerstand der Heizwendel
- Fertigungs- und Temperaturtoleranz (Temperaturbeiwert) der Heizwendel

In der Definition des Barcodes werden auch weitere Steuerverfahren (z.B. hinsichtlich des Stromverlaufs, z.B. Konstant- oder Stufenstrom) aufgeführt. Die gängige Methode ist aber die Prozeßsteuerung über eine konstante Spannung. Die Daten über Typ und Durchmesser des Heizwendel-Rohrteils werden lediglich im Protokoll abgelegt, aber nicht für die Steuerung verwendet. Zu den Prozeßdaten kann man auch Informationen über den eigentlichen Schweißvorgang zählen, so z.B. Fehler, Verlaufsprotokolle usw.

Für die Verarbeitung von Kunststoff-Rohrteilen mit Hilfe des Stumpfschweißverfahrens sind Geräte bekannt, die aufgrund der Eingabe der Rohrteildaten (Material, Durchmesser, Wanddicke (SDR) usw.) den Schweißvorgang automatisch oder halbautomatisch steuern. Diese Daten und auch eventuelle Zusatzdaten (Hersteller, Chargennummer, Typ) werden entsprechend protokolliert. Die Daten sind auf den Rohrteilen angegeben (eingeprägt, manchmal auch auf Begleitpapieren). Beim Elektroschweißen sind die Rohrteildaten zum Teil im Barcode vorhanden, aber auch auf dem Heizwendel-Rohrteil angebracht, so daß sie von bestimmten Geräten ebenfalls manuell erfaßt werden können.

Im Zuge der ISO Standardisierung (ISO 12176-4 Arbeitsdokument N250) werden in Zukunft auch die Rohrteildaten als codierte Information (Barcode, Magnetkarte oder Klartext) auf den Rohrteilen angebracht werden. Entsprechend werden folgende Daten sowohl für Rohre, wie auch für sonstige Teile und Heizwendel-Rohrteile (Fittings) mindestens zur Verfügung stehen:
- Hersteller
- Typ
- Durchmesser (Größe)
- SDR (Wanddickeninformation)
- Rohmaterialidentifzierung
- Rohmaterialklassifizierung
- Fließeigenschaft des Materials (MFI)

Sofern Daten hinsichtlich der Rohrteile, wie beispielsweise der Durchmesser, das Material usw. abgespeichert werden, kann vor Durchführung des Verbindungsvorganges, insbesondere eines Schweißvorganges die Zulässigkeit der Verbindung zwischen den Rohrteilen geprüft werden. Sofern sich hier ein negatives Ergebnis zeigen sollte, wird der Verbindungsvorgang nicht durchgeführt.

Um die Integrität der Datensätze weiter steigern zu können, kann weiterhin vorgesehen sein, daß die Identifikationskennung eines Rohrteils die den Verbindungsvorgang identifizierende Kennzeichnung ebenfalls enthält.

Eine weitere Möglichkeit besteht im Einsatz von GPS zur Lageerfassung der Verbindungsstelle.

Nach Erstellung des Rohrnetzes, oder Teilen davon, können die abgespeicherten Daten ausgelesen und in einem Protokoll ausgedruckt werden. Ebenso besteht die Möglichkeit, mittels der abgespeicherten Daten einen Rohrnetzplan z.B. unter Verwendung einer computerunterstützten Software, zu erstellen und diesen auszudrucken.

Die Eingabe der rohrteilspezifischen Daten kann sowohl von Hand als auch automatisch erfolgen. Im Falle eines automatischen Vorganges kann dies beispielsweise dadurch geschehen, daß eine Einrichtung zum Lesen von maschinenlesbaren Codes vorgesehen ist.

Hinsichtlich der Vorrichtung wird die vorliegende Aufgabe durch die Merkmale des Anspruchs 15 gelöst. In den sich darau anschließenden Unteranspruch 16 findet sich eine vorteilhafte Ausgestaltung dieser Lösung. Für die Vorrichtung gelten die gleichen Vorteile, wie sie vorstehend im Zusammenhang mit dem erfindungsgemäßen Verfahren erläutert worden sind.

Bereits vorstehend ist darauf hingewiesen worden, daß die Verbindung zweier Rohrteile durch Schweißen erfolgen kann. Hierauf ist die Erfindung aber nicht beschränkt, da auch andere Verbindungsarten verwendet werden können, beispielsweise eine Verbindung durch Verschrauben von Flanschen an den Rohrenden. Weiterhin ist noch zu bemerken, daß ein Rohrteil auch mit ein, zwei oder mehreren verschiedenen Verbindungsarten eingesetzt werden kann, beispielsweise ein T-Stück, welches an seinen beiden, in einer Linie liegenden Enden verschweißt und an seinem dritten Ende mittels einer Schraubverbindung an weitere Rohrteile usw. angeschlossen wird.

Hinsichtlich der Vorrichtung ist noch zu bemerken, daß diese innerhalb eines Gerätes zur Erstellung der Verbindung, beispielsweise einem Schweißgerät, integriert sein kann, aber auch ein Begleitgerät sein kann, in das die Rohrteildaten eingegeben werden können und das zur Generierung der Identifikationskennungen in der Lage ist. Unabhängig von der vorstehend erwähnten Ausgestaltung sollte aber das Gerät insbesondere ein Display bzw. eine der Anzeigeeinrichtung und eine Tastatur zur Eingabe, ggf. in Verbindung mit einem Barcodeleser aufweisen. Hinsichtlich des Displays ist noch zu bemerken, daß dieses in einer vorteilhaften Ausgestaltung in der Lage sein kann, das bereits erstellte Rohrnetz graphisch, insbesondere unter Verwendung von allgemein verständlichen Symbolen darzustellen.

Darüber hinaus ist noch zu bemerken, daß die Erfindung nicht darauf beschränkt ist, mittels eines einzelnen Verbindungsgerätes bzw. mittels einer einzelnen Vorrichtung zum automatischen Protokollieren der Verbindungsvorgänge ausgeführt zu werden. Beispielsweise besteht die Möglichkeit, daß mehrere Geräte gleichzeitig innerhalb ein und desselben Rohrnetzes eingesetzt werden können. In diesem Fall kann zur Unterscheidbarkeit der von jedem Gerät erstellten laufenden Verbindungsnummern bzw. generierten Identifikationskennungen entweder jedem Gerät eine besondere Kennung zugewiesen werden, die hinter den vorstehend genannten Daten angefügt wird, oder aber jedem Gerät ein bestimmter Nummernkreis zugewiesen werden, über den es dann die laufenden Verbindungsnummern bzw. Identifikationskennungen ausgeben kann.

Weitere vorteilhafte Ausgestaltungen sowie Ausführungsbeispiele des erfindungsgemäßen Verfahrens werden nachstehend anhand der beigefügten Zeichnungsfiguren erläutert. Hierbei ist:
- Figur 1a: ein schematisches Beispiel für ein Rohrnetz, bei dem die Rohrteile aus Kunststoff durch eine Stumpfschweißtechnik miteinander verbunden sind;
- Figur 1b: eine handschriftlich erstellte Skizze mit den Einträgen der laufenden Nummern der einzelnen Schweißverbindungsstellen des in Figur 1a gezeigten Rohrnetzes;
- Figur1 c: ein Schweißprotokoll einer Stumpfschweißmaschine, das von dieser bei der Erstellung des in Figur 1a gezeigten Rohrnetzes angefertigt wird;
- Figur 2a: ein schematisches Beispiel für ein Rohrnetz, bei dem die Rohrteile aus Kunststoff durch eine Heizwendel-Schweißtechnik miteinander verbunden sind;
- Figur 2b: eine handschriftlich erstellte Skizze mit den Einträgen der laufenden Nummern der einzelnen Schweißverbindungsstellen des in Figur 2a gezeigten Rohrnetzes;
- Figur 2c: ein Schweißprotokoll einer Heizwendel-Schweißmaschine, das von dieser bei der Erstellung des in Figur 2a gezeigten Rohrnetzes angefertigt wird;
- Figur 3a: ein Ablaufdiagramm zur Durchführung der erfindungsgemäßen Rohrplanaufnahme beim Stumpfschweißen;
- Figur 3b: ein Ablaufdiagramm zur Aufnahme bzw. Auswahl der Rohrteildaten beim Stumpfschweißen;
- Figur 3c: eine mit dem erfindungsgemäßen Verfahren erstellte Protokolliste;
- Figur 3d: die in Figur 3c gezeigte Protokolliste in nicht normalisierter Form;
- Figur 3e: eine schematische Darstellung eines Rohrnetzplanes;
- Figur 3f, 3g: ein Ablaufdiagramm zur Durchführung der erfindungsgemäßen Rohrplanaufnahme beim Heizwendelschweißen;
- Figur 3h: eine mit dem erfindungsgemäßen Verfahren erstellte Protokolliste;
- Figur 3i: ein schematischer Rohrnetzplan, und
- Figur 4: ein Blockdiagramm eines erfindungsgemäßen Gerätes.

Das im Folgenden beschriebene, erfindungsgemäße Verfahren, das anhand eines aus Kunststoff-Rohrteilen aufgebauten Rohrnetzes erläutert wird, wobei die Rohrteile durch das Stumpfschweißen bzw. Heizwendelschweißen miteinander verbunden werden, soll die Verbindung der einzelnen Rohrteile schon während der Erstellung des Rohrnetzes so erfassen und in einer Form protokollieren, daß ohne Zuhilfenahme einer nebenbei noch zu führenden, handschriftlichen Skizze die Anfertigung eines Rohrnetzplanes möglich ist.

Folgendes Verfahren macht dies möglich:
(1) Von jedem Rohrteil im Netz werden die spezifischen Daten, mindestens aber der Typ des Rohrteils von dem zur Erstellung der Schweißverbindung eingesetzten Gerät angefordert bzw. in dieses eingegeben. Die Eingabe kann manuell (z.B. Klartext am Rohrteil) oder automatisch (z.B. Barcode) erfolgen. Das Gerät erstellt für jedes Rohrteil eine für das jeweilige Netz eindeutige Identifikationskennung (= ID) und legt diese in einem Rohrteil-Speicher des Gerätes für die rohrteilspezifischen Daten beispielsweise in Form einer Rohrteilliste ab. Die Identifikationskennung kann beispielsweise aus einem den Typ des Rohrteils identifizierenden Buchstaben (z.B. Rohr = R, T-Stück = T usw.) und einer Zahl bestehen, die von Rohrteil zu Rohrteil eines Typs jeweils um "1" erhöht wird. Die Identifikationskennung zweier miteinander zu verschweißender Rohre kann dann beispielsweise die folgende Form " R001" und "R002" aufweisen.
(2) Vor Erstellung einer neuen Schweißverbindung fordert das Gerät die rohrteilspezifischen Daten aller an der Verbindung beteiligten Rohrteile an.
   (a) Für Rohrteile, die noch nicht in das Netz integriert sind, wird der vorstehend in Ziffer (1) genannte Schritt ausgeführt.
   (b) Ist das Rohrteil bereits in das Netz integriert (z.B. ein Rohrteil, das in der vorausgegangenen Schweißverbindung verwendet worden ist), so können die rohrteilspezifischen Daten anhand der Identifikationskennung dieses Rohrteils aus dem Rohrteil-Speicher entnommen werden.
   (c) Handelt es sich bei einem Rohrteil um ein Teil, das in ein anderes als das aktuelle Netz integriert ist, wird ebenfalls ein Eintrag gemäß dem vorstehend unter Ziffer (1) genannten Schritt erzeugt, dieser aber in geeigneter Weise als Anschluß- oder Übergangsstelle gekennzeichnet. Die Eingabe von Daten ist optional. Wahlweise kann auch die bereits im Rahmen des anderen Rohrnetzes vergebene Identikationskennung eingegeben werden.
(3) Die Anforderung der Daten und die Steuerung des Schweißvorganges wird durch die Schweißart (z.B. Stumpfschweißen, Heizwendelschweißen) bestimmt.
   (a) Stumpfschweißen:
      Hier ist die Steuerung trivial, da jeweils zwei Rohrteile miteinander verbunden werden. Allerdings kann über den Typ des Rohrteils die Anzahl der möglichen Verbindungen beschränkt werden (Rohr: 2, T-Stück: 3, usw.).
   (b) Heizwendelschweißen:
      Die Anforderung der Daten und die Steuerung des Schweißvorganges wird durch den Typ des Heizwendel-Rohrteils bestimmt. Es existieren Heizwendel-Rohrteile, mit denen ein, zwei oder drei Rohrteile auf einmal verbunden werden können.
(4) Jede von dem Schweißgerät hergestellte Schweißverbindung wird mit den Identifikationskennungen der eingesetzten Rohrteile unter Verwendung einer eindeutigen Kennung bzw. Kennzeichnung für die jeweilige Schweißverbindungsstelle (z.B. laufende Nummer, Naht-Nummer usw.) in einem Protokollspeicher des Gerätes beispielsweise in Form einer Verbindungsliste abgelegt. Der Protokollspeicher kann dabei mit dem vorstehend erwähnten Rohrteil-Speicher übereinstimmen.
(5) Als weitere Ausgestaltung soll das Gerät anhand der eingelesenen Daten prüfen, ob eine Verbindung der eingegebenen Rohrteile überhaupt möglich (geometrische Abmessungen, z.B. Durchmesser) oder zulässig (Material, SDR) ist.

Wird das oben angegebenen Verfahren streng eingehalten, so ist die Eindeutigkeit der Verknüpfung der Daten gegeben. Dabei ist es irrelevant, ob die Eingabe der Daten manuell oder über einen Datenträger erfolgt. Wünschenswert ist aber die Eingabe über einen Datenträger, da hier der Mensch als Fehlerquelle in weiten Teilen der Verarbeitung ausgeklammert wird.

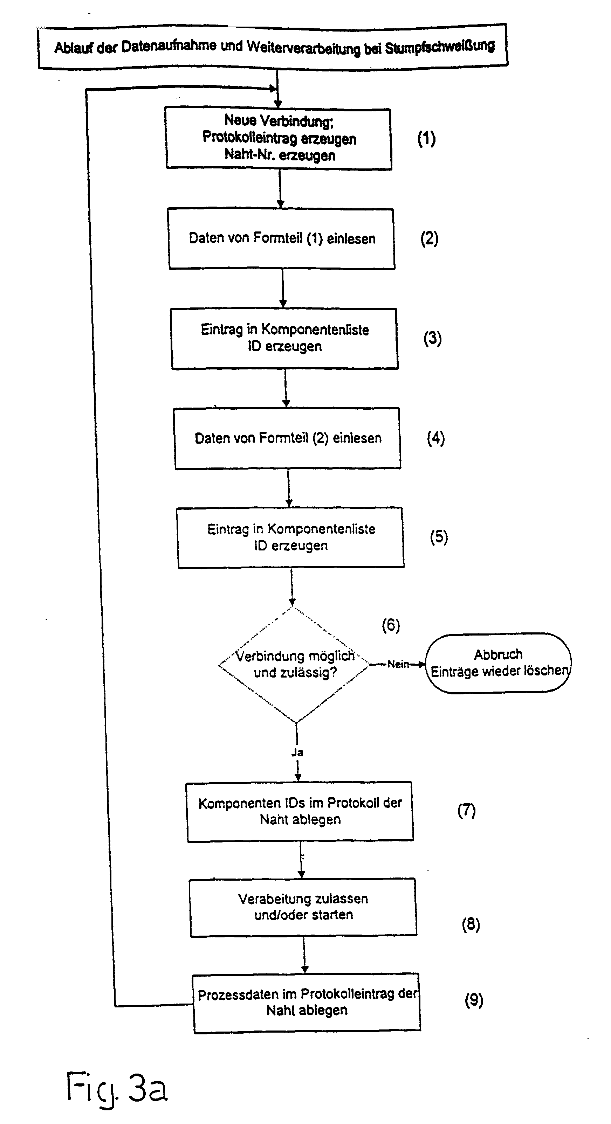

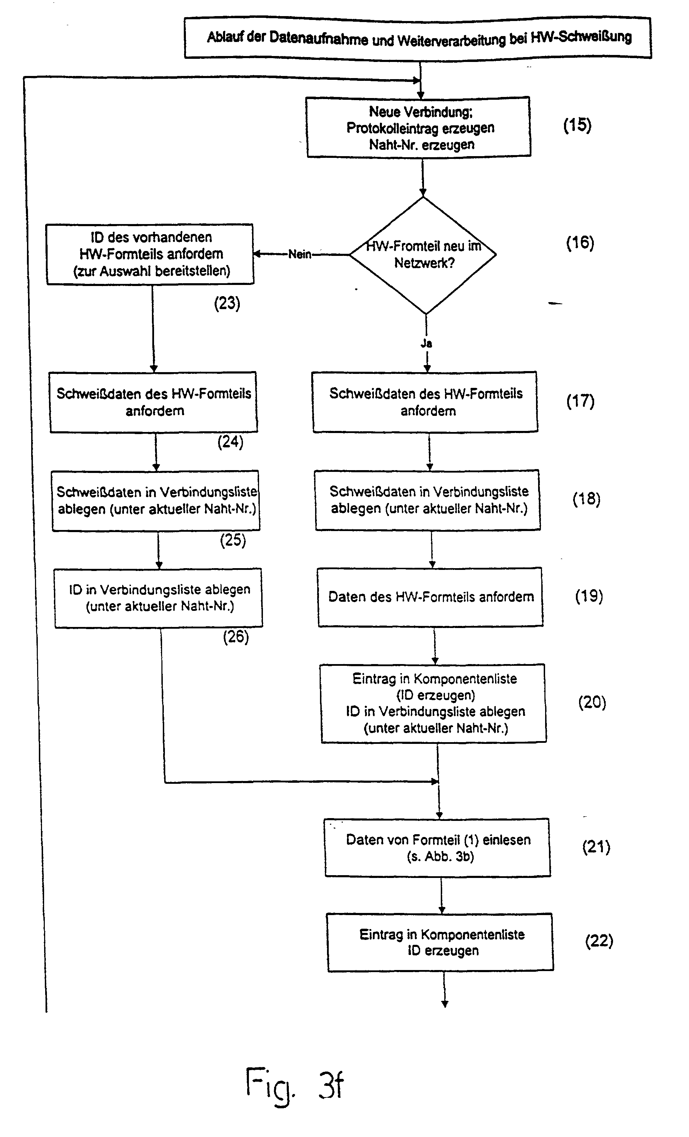

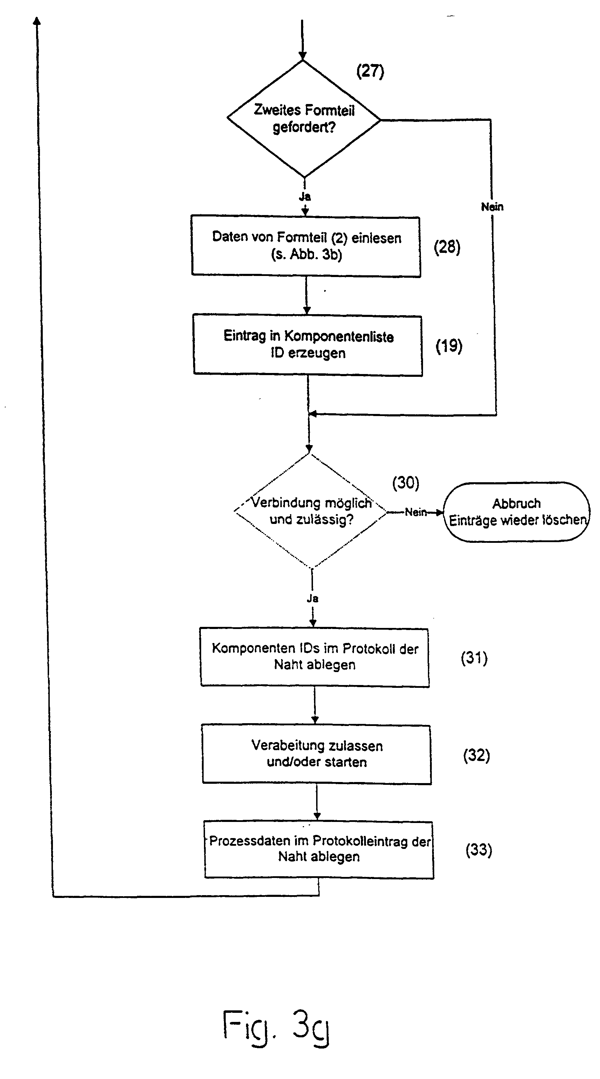

### Verfahrensablauf beim Stumpfschweißen (Fig. 3a - 3e)

Nach der Vorbereitung der Rohrteile für die Verbindung sowie Einschalten und Vorbereiten des Schweißgerätes kann eine neue Verbindung hergestellt werden. Hierzu wird ein entsprechend neuer Protokolleintrag in der Verbindungsliste erzeugt und mit einer eindeutigen laufenden Nummer bzw. Nahtnummer versehen (Schritt (1)). Hierbei werden eventuell auch allgemeine Daten wie Witterung, Kommissionsnummer, Schweißeridentifikation usw. vom Schweißgerät angefordert und unter der Protokollnummer abgespeichert. Anschließend fordert das Gerät die rohrteilspezifischen Daten des ersten Rohrteils an (Schritt (2)), das in den Figuren 3a bis 3d auch als Formteil bezeichnet wird. Dabei stehen, wie dies bereits vorstehend erwähnt worden ist, verschiedene Arten der Eingabe zur Verfügung.

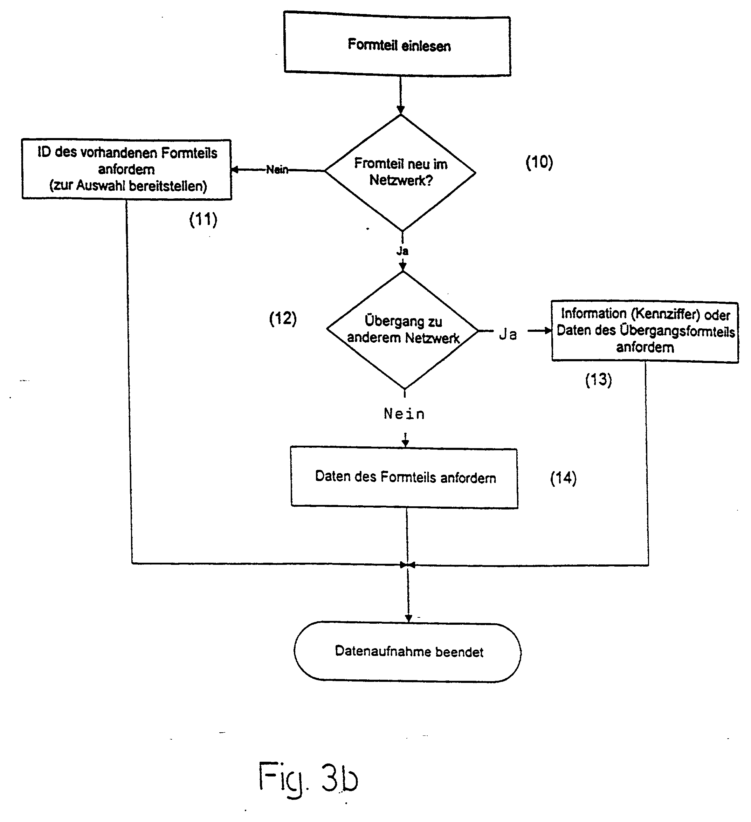

In Figur 3b ist ein Ablaufplan für die Eingabe der Daten eines Rohrteils wiedergegeben. Zunächst wird im Schritt 10 entschieden, ob es sich bei dem Rohrteil um ein neues Teil handelt. Falls dies nicht zutrifft, das Rohrteil also bereits Bestandteil des Rohrnetzes ist, wird die Identifikationskennung dieses Rohrteils aus dem Rohrteil-Speicher zusammen mit den rohrteilspezifischen Daten ausgelesen (Schritt (11)). Ebenso können mehrerer Rohrteile dem Benutzer angeboten werden, so daß dieser das Benötigte auswählen kann. Die Auswahl erfolgt dann an Hand der eindeutig dem Rohrteil zugewiesenen Identifikationskennung. Vorzugsweise kann hierbei vorgesehen sein, daß ein Rohrteil nicht mehr zur Auswahl unterbreitet wird, bei dem bereits die maximale Anzahl an Verbindungen mit anderen Rohrteilen erfolgte.

Handelt es sich um ein neues Rohrteil, wird im Schritt 12 entschieden, ob es sich um ein Rohrteil handelt, das einen Übergang zu einem weiteren Netz darstellt. Falls dies zutrifft, werden die spezifischen Daten des Übergangsrohrteiles eingegeben und die zugehörige Identifikationskennung generiert (Schritt (13)), die sich vorzugsweise von den Identifikationskennungen der in dem betrachteten Rohrnetz integrierten Rohrteile unterscheidet. Handelt es sich um kein Übergangsrohrteil, so werden die rohrteilspezifischen Daten (wenigstens der Typ des Rohrteils) eingegeben und die zugehörige Identifikationskennung erzeugt (Schritt (14)).

Anschließend kehrt der Ablauf zu dem Verfahren der Figur 3a zurück.

Nach der Eingabe der Daten des ersten Rohrteils und der Generierung der Identifikationskennung bzw. der Auswahl des zutreffenden Rohrteils aus der Liste der bereits eingegebenen Rohrteile werden die Daten des zweiten Rohrteils in gleicher Weise angefordert bzw. ausgewählt und ggf. eine entsprechende Identifikationskennung generiert (Schritt (4) und (5) in Fig. 3a).

Sind im Rahmen der rohrteilspezifischen Daten u.a. auch Durchmesser und Material eingegeben worden, so besteht die Möglichkeit, daß das Gerät prüft, ob die Verarbeitung der Rohrteile überhaupt möglich und/oder zulässig ist. Dies geschieht im Schritt (6) in Figur 3a. Ist die Erstellung einer Schweißverbindung nicht möglich, kann das Gerät das Verfahren abbrechen und die vorgenommenen Einträge wieder rückgängig machen.

Ist die Erstellung einer Schweißverbindung möglich und zulässig, werden die Identifikationskennungen der Rohrteile im aktuellen Protokolleintrag (Verbindungsliste) zusammen mit einer die Schweißverbindungsstelle eindeutig identifizierenden Kennung, wie zum Beispiel einer fortlaufenden Nummer usw. eingetragen (Schritt (7)). Zur Verbesserung der Integrität der Datensätze kann entsprechend auch zusätzlich die entsprechende Nahtnummer unter den Rohrteil-Identifikationskennungen eingetragen werden. Nach der Verarbeitung der Rohrteile, d.h. der Erstellung der Schweißverbindung (Schritt (8)) können dem Protokolleintrag (Verbindungsliste) die Prozeßdaten sowie weitere Daten angefügt werden (Schritt (9)). Es ist noch zu bemerken, daß der Schritt (7) auch erst nach dem Schritt (8) erfolgen kann.

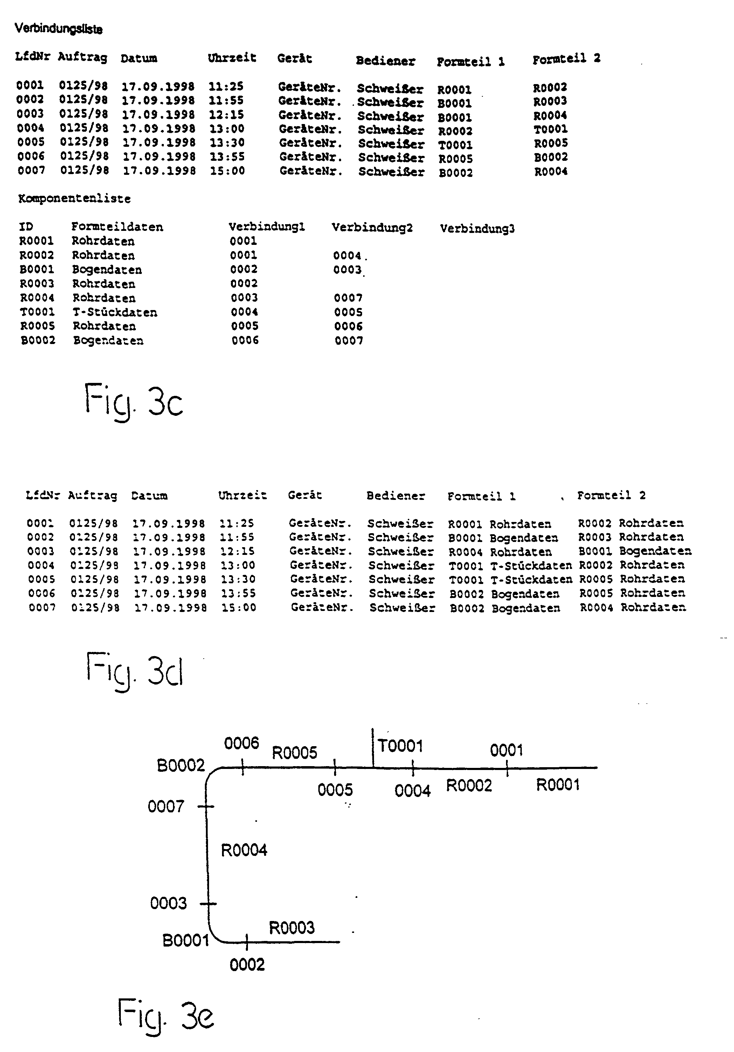

In Figur 3c findet sich ein Beispiel für die Art der Speicherung der Daten in einer Verbindungsliste und einer Rohrteil- bzw. Komponentenliste. Es besteht auch die Möglichkeit, diese Listen in eine nicht normalisierte Form zu überführen, die in Figur 3d gezeigt und in ihrem Aufbau zu der aus Figur 1 c entnehmbaren Liste ähnlich ist. Der grundlegende Unterschied besteht aber darin, daß auch hier jedem Rohrteil eine eindeutige Identifikationskennung zugewiesen wird. Man kann sogar in Figur 3d einige doppelte Einträge der Rohrteildaten (sh. Fig. 3c: Formteil 1 B0002 Bodendaten) weglassen, wenn die Daten zugrundegelegt werden, welche im zeitlichen Ablauf als erste unter einer bestimmten Identifikationskennung abgelegt worden sind.

Aus den Datensätzen der Figur 3c oder 3d läßt sich ggf. unter Zuhilfenahme eines Computers die Skizze für einen Rohrnetzplan auf einfache Weise ohne die Gefahr von Fehlern ableiten, wie sie in Figur 3e wiedergegeben ist.

Zusätzlich zu den oben genannten Daten ist es auch möglich, beim Benutzer die Länge des Rohrteils anzufordern. Da sich diese aber ändern kann (Rohr wird abgeschnitten), sollte die Komponentenliste jeweils die zeitlich letzte Eintragung enthalten.

### Verfahrensablauf beim Heizwendelschweißen (Fig. 3f - 3i)

Das Heizwendelschweißen unterscheidet sich nur in einigen Punkten von der im Zusammenhang mit den Figuren 3a, 3b erläuterten Vorgehensweise beim Stumpfschweißen. Es wird daher nachstehend nur auf die Unterschiede eingegangen.

Nach der Vorbereitung der Rohrteile für die Schweißverbindung, dem Einschalten und Vorbereiten des Schweißgerätes und dem Erstellen eines neuen Protokolleintrages in der Verbindungsliste mit laufender Nummer bzw. Nahtnummer (Schritt (15)) hängt das weitere Vorgehen im wesentlichen vom Typ des zu verschweißenden Heizwendel-Rohrteils ab. Denn je nachdem wie dieses aufgebaut ist, kann eine unterschiedliche Anzahl von Rohrteilen gleichzeitig verbunden bzw. das Heizwendel-Rohrteil mehrmals verarbeitet werden.

| **Heizwendel-Rohrteil** | **Anzahl der Rohrteile (Rohre)** | **Verarbeitungsschritte** | **Rohrteilabgang**^{**1)**} |
|---|---|---|---|
| Endkappe | 1 | 1 | - |
| Monofilar Fitting | 2 | 1 | - |
| Monofilar Bogen | 2 | 1 | - |
| Monofilar T-Stück | 2 | 1 | 1 |
| Bifilar Fitting | 2 | 2 | - |
| Bifilar Bogen | 2 | 2 | - |
| Bifilar T-Stück | 2-3 | 2-3 | 0-1 |
| Sattel | 1 | 1 | 1 |
| ... | | | |

| | | | |
|---|---|---|---|
| ¹⁾Rohrteilabgang: = das Heizwendel-Rohrteil stellt ein Rohrstück als Abgang bereit. | | | |

Daher wird die Anforderung der Rohrteildaten vom Typ des Heizwendel-Rohrteiles gesteuert. Darüber hinaus wird das Heizwendel-Rohrteil selbst in der Komponentenliste zur Auswahl geführt und entsprechend zur Auswahl bereitgestellt.

Die Figuren 3f, 3g zeigen den weiteren Ablauf der Datenaufnahme und Verknüpfung beim Heizwendelschweißen. Der wesentliche Unterschied zum Verfahren beim Stumpfschweißen liegt zum einen in der Anforderung der Daten des Heizwendel-Rohrteils (Schritte (16)-(20) und (23)-(26)) und zum anderen darin, daß die Anzahl der einzulesenden Rohrteile vom Heizwendel-Rohrteil abhängt (Schritt (27)), wie dies bereits vorstehend erläutert worden ist. Zu dem kann auch ein Heizwendel-Rohrteil, welches mit einem Abgang ausgestattet ist, als Rohrteil ausgewählt werden.

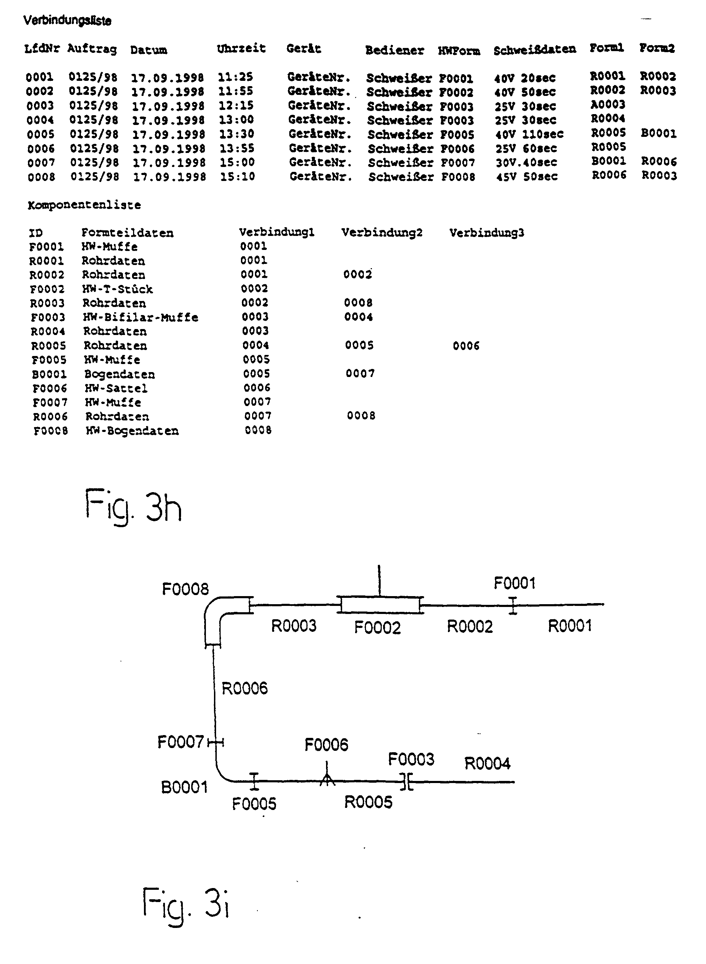

Als Ergebnis werden wieder je eine Verbindungs- und Komponentenlisten (Figur 3h) sowie die Skizze für einen Rohrnetz gemäß Figur 3i erstellt.

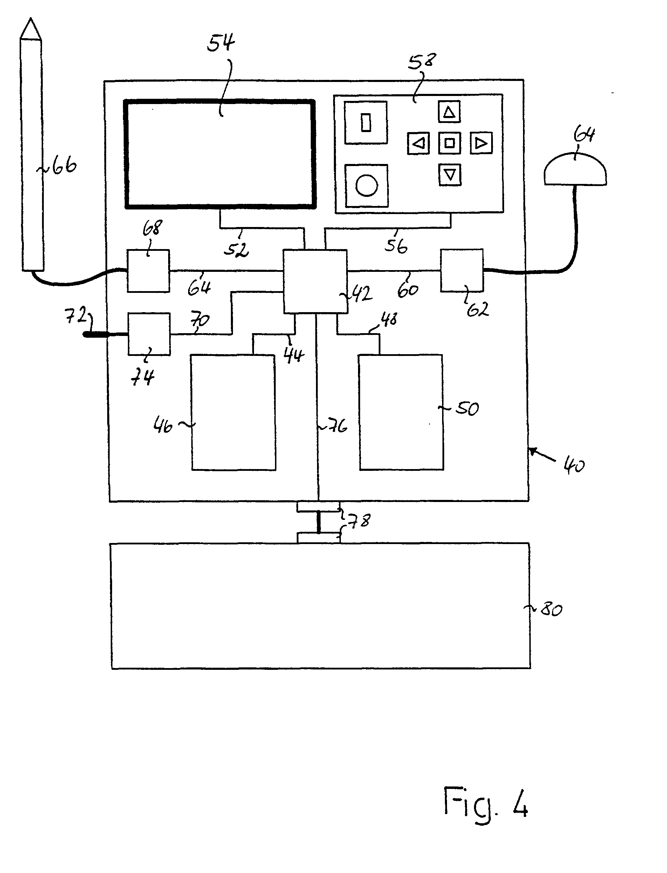

In Figur 4 ist ein Ausführungsbeispiel für eine Vorrichtung 40 zum automatischen Protokollieren der Verbindungsvorgänge bei der Erstellung von Rohrnetzwerken gezeigt, welches gemäß der Erfindung aufgebaut ist. Die Vorrichtung 40 kann als integraler Bestandteil eines Verbindungsgerätes, insbesondere eines Schweißgerätes verwendet werden oder kann als unabhängiges, tragbares Gerät eingesetzt werden.

Die Vorrichtung 40 weist eine CPU 42 u.a. zum Generieren einer ein Rohrteil eines Netzes eindeutig bezeichnenden Identifikationskennung auf, die über eine Datenleitung 44 mit einem Speicher 46 für die Verbindungsliste verbunden ist, der auch als Protokollspeicher bezeichnet werden kann. In dem Speicher 46 werden u.a. die laufenden Nummern der Verbindungsstellen abgelegt. Weiterhin steht die CPU 42 über eine Datenleitung 48 mit einem Speicher 50 für die Formteil- bzw. Rohrteil-Datenliste in Verbindung, in dem insbesondere zumindest die durch die CPU 42 generierten Identifikationskennungen der Rohrteile abgelegt werde und der auch als Rohrteil-Speicher bezeichnet werden kann. Prinzipiell können die beiden Speicher 46, 50 auch durch einen Speicher oder durch mehr als einen Speicher gebildet sein.

Die CPU 42 ist darüber hinaus über eine Datenleitung 52 mit einem Display 54 verbunden, auf dem alphanumerische und/oder graphische Symbole wiedergebbar sind. Mittels des Displays 54 können die von der Vorrichtung 40 generierten Identifikationskennungen, die bereits für ein Rohrteil erzeugte Identifikationskennung, der Inhalt der Verbindungsliste, der Inhalt der Rohrteil-Datenliste und ggf. das bereits erstellte Rohrnetz alphanumerisch und/oder graphisch dargestellt werden.

Über eine weitere Datenleitung 56 ist die CPU 42 noch mit einem Tastaturfeld 58 zur manuellen Eingabe und/oder Auswahl der Identifikationskennungen ausgestattet.

Über eine weitere Datenleitung 60 und über eine Einrichtung 62 zum digitalen Umsetzen von Satelittennavigationsdaten ist die CPU 42 mit einem GPS-Empfänger 64 verbunden.

Über eine Datenleitung 64 ist die CPU 42 mit einem Barcodeleser 66 verbunden, wobei in der Datenleitung 64 eine digitale Umsetzeinrichtung 68 für die vom Barcodeleser 66 gelesenen Daten in digitale Daten vorgesehen ist. Darüber hinaus steht die CPU 42 über eine Datenleitung 70 mit einem Temperatursensor 72 in Verbindung, wobei ebenfalls in der Datenleitung 70 eine Einrichtung 74 zum Umwandeln der von dem Temperatursensor 72 erfaßten Daten in digitale Daten eingeschaltet ist.

Schließlich ist die CPU 42 über eine Datenleitung 76 mit einer Schnittstelle 78 verbunden, über die das Gerät bzw. die Vorrichtung 40 mit einer Regel- und Steuereinheit 80 für den Verbindungsvorgang, insbesondere einem Schweißgerät verbindbar ist. Die Schnittstelle 78 kann sowohl hardwaremäßig als auch softwaremäßig ausgeführt sein. Weiterhin kann sie als Stecker ausgeführt sein, so daß die Vorrichtung 40 an der Regel- und Steuereinheit 80 anschließbar ist.

## Patentansprüche

1. Verfahren zum automatischen Protokollieren der Erstellung eines Rohrnetzes, das durch Verbinden von Rohrteilen mittels einer Verbindungsvorrichtung hergestellt wird, bei dem vor einem Verbindungsvorgang rohrteilspezifische Daten der miteinander zu verschweißenden Rohrteile erfaßt und in einem Speicher zusammen mit einer fortlaufenden, den jeweiligen Verbindungsvorgang eindeutig identifizierenden Kennzeichnung abgelegt werden,
wobei für die in einem Verbindungsvorgang miteinander zu verbindenden Rohrteile des Rohrnetzes jeweils eine zu dem jeweiligen Rohrteil des Rohrnetzes eindeutig gehörende Identifikationskennung durch eine CPU der Verbindungsvorrichtung generiert wird, die zusammen mit der den Verbindungsvorgang identifizierenden Kennzeichnung in dem Speicher abgelegt wird.

2. Verfahren nach Anspruch 1,
**dadurch gekennzeichnet, daß** vor der Durchführung der Verbindungsvorgänge für ein Rohrnetz sämtlichen Rohrteilen jeweils eine zu einem Rohrteil des Rohrnetzes eindeutig gehörende Identifikationskennung zugewiesen wird.

3. Verfahren nach Anspruch 1,
**dadurch gekennzeichnet, daß** vor der Durchführung eines Verbindungsvorganges den für diesen Schweißvorgang verwendeten Rohrteilen jeweils eine zu dem jeweiligen Rohrteil des Rohrnetzes eindeutig gehörende Identifikationskennung zugewiesen wird.

4. Verfahren nach einem der Ansprüche 1 bis 3,
**dadurch gekennzeichnet, daß** bei einem Verbinden eines bereits in das Rohrnetz integrierten Rohrteils dessen bereits zugewiesene Identifikationskennung aus dem Speicher aufgerufen sowie der den Verbindungsvorgang identifizierenden Kennzeichnung verknüpft und in dem Speicher abgelegt wird.

5. Verfahren nach einem der Ansprüche 1 bis 3,
**dadurch gekennzeichnet, daß** bei einem Verbinden eines bereits in das Rohrnetz integrierten Rohrteils dessen bereits zugewiesene Identifikationskennung gelesen sowie der den Verbindungsvorgang identifizierenden Kennzeichnung verknüpft und in dem Speicher abgelegt wird.

6. Verfahren nach einem der Ansprüche 1 bis 5,
**dadurch gekennzeichnet, daß** bei einem Übergang zu einem weiteren Rohrnetz für das Übergangsrohrteil ein den Übergang kennzeichnende Identifikationskennung generiert wird.

7. Verfahren nach einem der Ansprüche 1 bis 6,
**dadurch gekennzeichnet, daß** neben der Identifikationskennung für die Rohrteile, der den Verbindungsvorgang identifizierenden Kennzeichnung und dem Typ des Rohrteils noch eine der folgenden Dateninformationen in dem Speicher abgelegt werden:
- die Kommisionsnummer des Auftrages,
- Datum, Uhrzeit, Umgebungstemperatur, Wetter,
- Daten des Verbindungsgerätes,
- Daten der Bedienungsperson,
- Prozeßdaten oder
- Rohrteildaten.

8. Verfahren nach Anspruch 7,
**dadurch gekennzeichnet, daß** vor Durchführung des Verbindungsvorganges, insbesondere eines Schweißvorganges die Zulässigkeit der Verbindung zwischen den Rohrteilen geprüft wird.

9. Verfahren nach einem der Ansprüche 1 bis 8,
**dadurch gekennzeichnet, daß** die Identifikationskennung eines Rohrteils die den Verbindungsvorgang identifizierende Kennzeichnung mitenthält.

10. Verfahren nach einem der Ansprüche 1 bis 9,
**dadurch gekennzeichnet, daß** nach Erstellen des Rohrnetzes, oder Teilen davon, die abgespeicherten Daten ausgelesen und in einem Protokoll ausgedruckt werden.

11. Verfahren nach einem der Ansprüche 1 bis 10,
**dadurch gekennzeichnet, daß** nach Erstellen des Rohrnetzes, oder Teilen davon, mit den abgespeicherten Daten ein Rohrplan erstellt und ausgedruckt wird.

12. Verfahren nach einem der Ansprüche 1 bis 11,
**dadurch gekennzeichnet, daß** das Lesen der rohrspezifischen Daten automatisch erfolgt.

13. Verfahren nach einem der Ansprüche 1 bis 12,
**dadurch gekennzeichnet, daß** die Eingabe der rohrspezifischen Daten von Hand erfolgt.

14. Verfahren nach einem der Ansprüche 1 bis 13,
**dadurch gekennzeichnet, daß** die den Verbindungsvorgang identifizierende Kennzeichnung automatisch erstellt wird.

15. Vorrichtung die Verbindungsvorgänge bei der Erstellung von Rohrnetzen automatisch protokolliert, welche, durch Verbinden von Rohrteilen herstellbar sind, und die das Verfahren nach einem der Ansprüche 1 bis 14 durchführt, mit einer Eingabeeinrichtung (58; 66), einer Einrichtung (42) zum Generieren einer den jeweiligen Verbindungsvorgang eindeutig identifizierenden Kennung und wenigstens einem Speicher (46, 50),
wobei weiterhin eine Einrichtung (42) zum automatischen Generieren von einer einem Rohrteil des Netzes eindeutig zugehörigen Identifikationskennung vorgesehen ist, und wobei die Vorrichtung Bestandteil einer Verbindungsvorrichtung ist.

16. Vorrichtung nach Anspruch 15,
**dadurch gekennzeichnet, daß** die Eingabeeinrichtung (58; 65) eine Einrichtung (66) zum Lesen von maschinenlesbaren Codes, insbesondere Barcodes enthält.

## Claims

1. Method for automatically logging the construction of a pipe network, which is produced by connecting pipe sections by means of a connection device, wherein, before a connecting operation, pipe section-specific data concerning the pipe sections to be welded together is acquired and is stored in a memory together with a sequential designation unambiguously identifying the connecting operation in each case, wherein, for the pipe sections of the pipe network to be connected to one another in a connecting operation, an identification code appertaining. unambiguously to the pipe section of the pipe network in each case is generated in each case by a CPU of the connection device, which is stored together with the designation identifying the connecting operation in the memory.

2. Method according to claim 1, **characterised in that**, before performance of the connecting operations for a pipe network, an identification code appertaining unambiguously to a pipe section of the pipe network in each case is allocated to all pipe sections.

3. Method according to claim 1, **characterised in that**, before performance of a connecting operation, an identification code appertaining unambiguously to the pipe section of the pipe network in each case is allocated to the pipe sections used for this welding operation in each case.

4. Method according to any one of claims 1 to 3, **characterised in that**, in the event of connection of a pipe section already integrated in the pipe network, its pre-allocated identification code is called up from the memory and is linked to the designation identifying the connecting operation and is stored in the memory.

5. Method according to any one of claims 1 to 3, **characterised in that**, in the event of connection of a pipe section already integrated in the pipe network, its pre-allocated identification code is read and is linked to the designation identifying the connecting operation and is stored in the memory.

6. Method according to any one of claims 1 to 5, **characterised in that**, in the event of a transition to a further pipe network, an identification code identifying the transition is generated for the transition pipe section.

7. Method according to any one of claims 1 to 6, **characterised in that**, besides the identification code for the pipe sections, the designation identifying the connecting operation and the type of pipe section, one of the following information items is stored in the memory:
- the commission number of the job,
- date, time, ambient temperature, weather,
- data concerning the connection device,
- data concerning the operator,
- process data or
- pipe section data.

8. Method according to claim 7, **characterised in that**, before performance of the connecting operation, in particular a welding operation, the reliability of the connection between the pipe sections is checked.

9. Method according to any one of claims 1 to 8, **characterised in that** the identification code of a pipe section also contains the designation identifying the connecting operation.

10. Method according to any one of claims 1 to 9, **characterised in that**, after construction of the pipe network or parts thereof, the stored data is read out and is printed out in a log.

11. Method according to any one of claims 1 to 10, **characterised in that**, after construction of a pipe network or parts thereof, a pipe plan is produced using the stored data and is printed out.

12. Method according to any one of claims 1 to 11, **characterised in that** reading of the pipe-specific data is performed automatically.

13. Method according to any one of claims 1 to 12, **characterised in that** entry of the pipe-specific data is performed by hand.

14. Method according to any one of claims 1 to 13, **characterised in that** the designation identifying the connecting operation is generated automatically.

15. Device which automatically logs which connecting operations in respect of the construction of pipe networks can be produced by connecting pipe sections and which performs the method according to any one of claims 1 to 14, with an input device (58; 66), a device (42) for generating a designation unambiguously identifying the connecting operation in each case and at least one memory (46, 50), wherein a device (42) for automatically generating an identification code appertaining unambiguously to a pipe section of the network is also provided, and

16. Device according to claim 15, **characterised in that** the input device (58; 65) contains a device (66) for reading machine-readable codes, in particular barcodes, the device being a component of a connection device.

## Revendications

1. Procédé pour l'établissement automatique d'un procès-verbal de la mise en oeuvre d'un réseau de tuyauterie fabriqué par connexion de pièces de tubes à l'aide d'un dispositif de connexion lors duquel, avant une procédure de connexion, des données spécifiques aux pièces de tubes à souder l'une avec l'autre sont saisies et déposées dans une mémoire avec une marque identifiant clairement la procédure de connexion respective,
une marque d'identification allant clairement avec la partie de tube correspondante du réseau de tuyauterie, qui est déposée dans la mémoire avec la marque qui identifie la procédure de connexion étant générée par une unité centrale du dispositif de connexion.

2. Procédé selon la revendication 1, **caractérisé en ce que**, avant la mise en oeuvre des procédures de connexion pour un réseau de tuyauterie, une marque d'identification allant clairement avec une pièce de tube du réseau de tuyauterie est respectivement affectée à toutes les pièces de tube.

3. Procédé selon la revendication 1, **caractérisé en ce que**, avant la mise en oeuvre d'une procédure de connexion, une marque d'identification allant clairement avec la pièce de tube correspondante du réseau de tuyauterie est respectivement affectée aux pièces de tubes utilisées pour cette procédure de soudage.

4. Procédé selon une des revendications 1 à 3, **caractérisé en ce que**, lors d'une connexion d'une pièce de tube déjà intégrée dans le réseau de tuyauterie, sa marque d'identification déjà affectée est appelée dans la mémoire et enchaîné à la marque qui identifie la connexion puis déposée dans la mémoire.

5. Procédé selon une des revendications 1 à 3, **caractérisé en ce que**, lors d'une connexion d'une pièce de tube déjà intégrée dans le réseau de tuyauterie, sa marque d'identification déjà affectée est lue et enchaînée à à la marque qui identifie la connexion puis déposée dans la mémoire.

6. Procédé selon une des revendications 1 à 5, **caractérisé en ce que**, lors d'un passage à un autre réseau de tuyauterie, une marque d'identification qui **caractérise** le passage est générée pour la pièce de tube de transition.

7. Procédé selon une des revendications 1 à 6, **caractérisé en ce que**, outre la marque d'identification pour les pièces de tubes, la marque qui identifie de la connexion et le type de pièce de tube, une des informations de données suivantes est également déposée dans la mémoire :
- le numéro de commission de la commande
- date, heure, température ambiante, météo,
- données de l'appareil de connexion
- données de l'opérateur
- données de processus ou
- données de la pièce de tube.

8. Procédé selon la revendication 7, **caractérisé en ce que**, avant la mise en oeuvre de la connexion, en particulier d'une procédure de soudage, l'admissibilité de la connexion entre les pièces de tubes est contrôlée.

9. Procédé selon une des revendications 1 à 8, **caractérisé en ce que** la marque d'identification d'une pièce de tube contient également la marque qui identifié la procédure de connexion.

10. Procédé selon une des revendications 1 à 9, **caractérisé en ce que**, après la mise en oeuvre du réseau de tuyauterie ou de parties de cette dernière, les données mémorisées sont lues et imprimées dans un procès-verbal.

11. Procédé selon une des revendications 1 à 10, **caractérisé en ce que**, après la mise en oeuvre du réseau de tuyauterie ou de parties de ce dernier, un plan des tubes est établi et imprimé à l'aide des données mémorisées.

12. Procédé selon une des revendications 1 à 11, **caractérisé en ce que** la lecture des données spécifiques des tubes est automatique.

13. Procédé selon une des revendications 1 à 12, **caractérisé en ce que** l'entrée des données spécifiques des tubes est effectuée manuellement.

14. Procédé selon une des revendications 1 à 13, **caractérisé en ce que** la marque qui identifie la procédure de connexion est générée automatiquement.

15. Dispositif qui établit automatiquement un procès-verbal des procédures de connexion qui peuvent être fabriqués en connectant des pièces de tubes lors de la mise en oeuvre de réseaux de tuyauterie et qui met le procédé en oeuvre selon une des revendications 1 à 14 avec un dispositif d'entrée (58, 66), un dispositif (42) pour générer un marquage qui identifie clairement la procédure de connexion correspondante et au moins une mémoire (46, 50), au moins un dispositif (42) étant également prévu pour la génération automatique d'une marque d'identification clairement associée à une pièce de tube du réseau étant prévu, et le dispositif faisant partie d'un dispositif de connexion.

16. dispositif selon la revendication 15, **caractérisé en ce que** le dispositif d'entrée (58, 65) contient un dispositif (66) pour la lecture de codes lisibles par des machines, en particulier de codes-barres.
